# EUROPEAN PATENT SPECIFICATION

(11) **EP 2 516 201 B1**
(45) Date of publication and mention of the grant of the patent: **15.05.2013**
(21) Application number: 10798978.2
(22) Date of filing: 21.12.2010
(51) Int. Cl.: B60L 5/00, B60M 3/04

(54) **PROVIDING A PLURALITY OF VEHICLES, IN PARTICULAR TRACK BOUND VEHICLES, WITH ELECTRIC ENERGY**
VERSORGUNG VON MEHREREN FAHRZEUGEN, IM BESONDEREN VON SCHIENENFAHRZEUGEN, MIT ELEKTRISCHER ENERGIE
ALIMENTER UN NOMBRE DE VÉHICULES, EN PARTICULIER DE VÉHICULES RELIÉS À DES RAILS, AVEC DE L'ÉNERGIE ÉLECTRIQUE

(30) Priority: 23.12.2009 GB 0922544
(43) Date of publication of application: 31.10.2012
(73) Proprietor: Bombardier Transportation GmbH, 10785 Berlin (DE)
(72) Inventor: VOLLENWYDER, Kurt, Kingston Ontario K7M 3Y8 (CA); DICKSON, Timothy, Russell, Kingston Ontario K7M 4H1 (CA); WORONOWICZ, Konrad, Kingston Ontario K7P 0E4 (CA)
(74) Representative: Patentanwälte Bressel und Partner
(86) International application number: PCT/EP2010/007988
(87) International publication number: WO 2011/076436

(56) References cited:
- DE-A1-102007 012 686
- DE-C1- 4 429 656
- US-A1- 2008 011 184

## Description

The invention relates to an arrangement and a method for providing a plurality of vehicles, in particular track bound vehicles, with electric energy. In particular, the track bound vehicle may be a light rail vehicle (e.g. a tram).

In particular track bound vehicles, such as conventional rail vehicles, mono-rail vehicles, trolley busses and vehicles which are guided on a track by other means, such as other mechanical means, magnetic means, electronic means and/or optical means, require electric energy for propulsion on the track and for operating auxiliary systems, which do not produce traction of the vehicle. Such auxiliary systems are, for example, lighting systems, heating and/or air condition system, the air ventilation and passenger information systems. However, more particularly speaking, the present invention is related to transferring electric energy to a vehicle which is not necessarily (but preferably) a track bound vehicle. Generally speaking, the vehicle may be, for example, a vehicle having an electrically operated propulsion motor. The vehicle may also be a vehicle having a hybrid propulsion system, e.g. a system which can be operated by electric energy or by other energy, such as electrochemically stored energy or fuel (e.g. natural gas, gasoline or petrol).

Track bound vehicles, in particular vehicles for public passenger transport, usually comprise a current collector (alternatively a device) for mechanically and electrically contacting a line conductor along the track, such as an electric rail or an overhead line. At least one propulsion motor on board the vehicles is fed with the electrical power from the external track or line and produces mechanical propulsion force.

Trams and other local or regional trains are operated usually via overhead lines within cities. However, especially in historic parts of cities, overhead lines are undesirable. On the other hand, conductor rails in the ground or near the ground cause safety problems. Inductively transferring energy from the track to the vehicle, i.e. producing electromagnetic fields, is subject to restrictions regarding EMC (electromagnetic compatibility). On one hand, electromagnetic fields may interfere with other technical devices. On the other hand, people and animals should not be subjected to electromagnetic fields permanently. At least, the respective limit values for field intensity must be observed.

In many cases, the track of the vehicle is not used by just one vehicle, but by several vehicles. Therefore, a continuous line may be used to produce the electromagnetic fields for providing energy to several vehicles. However, this causes fields where no vehicle is present. Consequently, the continuous line may be divided in segments which can be operated separately of each other. On the other hand, dividing the continuous line into segments which are electrically separated requires additional equipment, such as switches, connecting lines and/or inverters. See US 2008/01184, DE 44229656 and DE 10 2007 012686 for examples.

It is an object of the present invention to provide an arrangement and a method for transferring energy to a vehicle which reduces the emission of electromagnetic fields compared to the operation of a continuous line along the track and which requires a small amount or number of electric or electronic components, such as lines, switches and/or inverters.

According to the present invention energy is transferred from an electric conductor arrangement, which is arranged along the track, to the vehicles travelling on the track without having electric contact between the vehicle and the conductor arrangement. The conductor arrangement carries an alternating current which generates a respective electromagnetic field and the electromagnetic field is used to transfer the electric energy to the vehicle.

For example, the conductor arrangement is located in and/or under the track, e.g. under the surface of the ground on which the vehicles travel. However, the invention also includes the case that at least a part of the conductor arrangement is located sideways of the track, for example when the track is located in the country side or in a tunnel. The frequency of the alternating current which flows through the conductor arrangement may be in the range of 5-100 kHz, in particular in the range of 10-30 kHz, preferably about 20 kHz, for example.

The conductor arrangement comprises a plurality of consecutive segments, wherein each segment extends along a different section of a path of travel of the vehicles. Each of the consecutive segments comprises at least one phase line for carrying a phase of an alternating current for producing the alternating electromagnetic field. Corresponding phase lines of neighbouring consecutive segments for carrying the same phase of the alternating current are connected in series to each other. Such a series connection reduces the number of electric or electronic components needed to operate the segments. In particular, the number of inverters and cables can be reduced.

For example, there are three phases of the alternating current and, correspondingly, three phase lines in each segment. The phase shift of the currents which flow through the different phase lines may be, as usual, 120 degrees. However, the invention also covers arrangement having only one or two phases or more than three phases.

Furthermore, the arrangement comprises a power supply line for supplying electric energy to the segments. The power supply line may be a direct current (DC) or alternating current (AC) power supply line. In case of an AC power supply line the alternating current is to be converted to the desired alternating current of the conductor arrangement. In case of a DC power supply line the direct current is to be inverted, i.e. an inverter is required for inverting the direct current carried by the power supply line to the alternating current of the conductor arrangement. The converter or inverter is connected to each interface between two neighbouring consecutive segments, thereby connecting the power supply line with the phase lines of the neighbouring consecutive segments. In the following, the term "switching device" is used as a general expression for the converter, inverter or other arrangement of switches.

Using a DC power supply line has the advantage that no compensating means, such as capacities, are needed in order to compensate the inductance of the alternating current power supply line. Since the current in the DC supply line is a direct current, losses due to any inductance compensation do not occur. Furthermore, an alternating current in the power supply line would also cause an electromagnetic field. This field can be shielded from the environment, e.g. by burying the supply line in the ground and/or by using metal shields, but shielding or burying causes extra costs. Also, filters for filtering undesired frequencies are not required for the DC supply line.

In addition, the switching devices connecting the power supply line and the phase lines can be operated in such a manner that desired sectors (comprising one or more than one of the consecutive segments) of the conductor arrangement are active (produce the electromagnetic field) and other sectors are not active (do not produce an electromagnetic field). If segments are active only while a vehicle is traveling within the respective region of the path of travel, energy is saved and EMC requirements can easily be fulfilled. In other words: the concept of the preferred embodiment of the present invention is to produce the alternating current locally and preferably where and when necessary.

For example, the lengths of the segments along the path of travel are shorter than the length of a vehicle in the travel direction and the segments may be operated only if a vehicle is already occupying the respective region of the path of travel along which the segment extends. In case of a rail vehicle, "occupied" means that the vehicle is driving on the rails along which the segment extends. Preferably, the segments are operated only if the vehicle is fully occupying the respective region of the path of travel. For example, the rail vehicle is longer (in the direction of travel) than the segment and the vehicle's front and end are driving beyond the limits of the segment, if viewed from the center of the segment. Therefore a segment may also be switched on (i.e. the alternating current through the segment is starting to flow) before a receiving device of a vehicle for receiving the transferred energy enters the region of the path of travel along which the segment extends.

In case of a DC power supply line, an inverter is used as switching device. Typically, the inverters comprise two electrically controllable semiconductor switches (e.g. Insulated Gate Bipolar Transistors) in series to each other for each phase of the alternating current in the conductor arrangement. The inverter produces the alternating current by repeatedly switching on and off the switches. This technology of manufacturing and operating inverters is well known in practice.

It is now proposed in order to solve the object defined above that the arrangement comprises a control device for controlling the operation of the switching device in such a manner that:
● a first active sector of the conductor arrangement, which sector comprises at least one of the consecutive segments, is operated to produce an electromagnetic field in order to transfer electromagnetic energy to a first vehicle, wherein a first switching device is connected to a first end of the first sector and a second switching device is connected to a second end of the first sector opposite to the first end so that the first switching device and the second switching device are connected by at least one phase line of the first sector, each phase line consisting of the phase line or the phase lines of one or more than one segment corresponding to the number of the segments of the first sector, wherein the first and second switching device are controlled to operate at a phase shift so that an alternating voltage is produced across each phase line of the first sector,
● a second active sector of the conductor arrangement, which comprises at least one of the consecutive segments, is operated to produce an electromagnetic field in order to transfer electromagnetic energy to a second vehicle, wherein a third switching device is connected to a first end of the second sector and a fourth switching device is connected to a second end of the second sector opposite to the first end so that the third switching device and the fourth switching device are connected by at least one phase lines of the second sector, each phase line consisting of the phase line or the phase lines of one or more than one segment corresponding to the number of the segments of the sector, wherein the third and fourth switching device are controlled to operate at a phase shift so that an alternating voltage is produced across each phase line of the second sector,
● if there are further segments of the plurality of consecutive segments of the conductor arrangement connecting the segments of the first and second sector and if none of the further segments is to be operated to transfer electromagnetic energy to a vehicle, the first to fourth switching device are controlled to produce no voltage (i.e. zero voltage) across the phase line(s) of the further segments.

In addition, the following is proposed: A method of providing a plurality of vehicles, in particular track bound vehicles, with electric energy, wherein:
- an electric conductor arrangement is operated to produce alternating electromagnetic fields, thereby transferring electromagnetic energy to the vehicles,
- the conductor arrangement comprises a plurality of consecutive segments (T1, T2, T3, T4, T5) which are operated separately, wherein each segment (T1, T2, T3, T4, T5) extends along a different section of a path of travel of the vehicles,
- each of the consecutive segments comprises at least one phase line which is used to carry a phase of an alternating current for producing the alternating electromagnetic field,
- corresponding phase lines of neighbouring consecutive segments for carrying the same phase of the alternating current are used in series connection to each other,
- a power supply line is used for supplying electric energy to the segments,
- switching devices (e.g. converters, inverters or another arrangement of switches) are used for generating the alternating current of the conductor arrangement from the current carried by the power supply line, such a switching device being connected to each interface between two neighbouring consecutive segments, thereby connecting the power supply line with the phase lines of the neighbouring consecutive segments,
- the operation of the switching devices are controlled in such a manner that:
   ● a first active sector of the conductor arrangement, which comprises at least one of the consecutive segments, is operated to produce an electromagnetic field in order to transfer electromagnetic energy to a first vehicle, wherein a first switching device is connected to a first end of the first sector and a second switching device is connected to a second end of the first sector opposite to the first end so that the first switching device and the second switching device are connected by at least one phase line of the first sector, each phase line consisting of the phase line or the phase lines of one or more than one segment corresponding to the number of the segments of the first sector, wherein the first and second switching device are controlled to operate at a phase shift so that an alternating voltage is produced across each phase line of the first sector,
   ● a second active sector of the conductor arrangement, which comprises at least one of the consecutive segments, is operated to produce an electromagnetic field in order to transfer electromagnetic energy to a second vehicle, wherein a third switching device is connected to a first end of the second sector and a fourth switching device is connected to a second end of the second sector opposite to the first end so that the third switching device and the fourth switching device are connected by at least one phase lines of the second sector, each phase line consisting of the phase line or the phase lines of one or more than one segment corresponding to the number of the segments of the sector, wherein the third and fourth switching device are controlled to operate at a phase shift so that an alternating voltage is produced across each phase line of the second sector,
   ● if there are further segments of the plurality of consecutive segments of the conductor arrangement connecting the segments of the first and second sector and if none of the further segments is to be operated to transfer electromagnetic energy to a vehicle, the first to fourth switching device are controlled to produce no voltage across the phase line(s) of the further segments.

As mentioned above, it is a basic idea of the present invention to use a conductor arrangement for producing the electromagnetic field or fields which has consecutive segments. The consecutive segments extend along the track of the vehicles. The phase lines of the consecutive segments can be realised in different manner. For example, the phase lines may be coils or straight lines or mixtures thereof. However, it is preferred that the phase lines extend along a serpentine-like path in the direction of travel of the vehicles.

Since the phase lines of consecutive segments are electrically connected to each other and since the operation should include situations where at least some of the segments are not active, wherein these non-active segments are located in between active segments, the control of the switching devices is performed in a special manner: The switching devices at the opposite end of the non-active segment or segments are operated to produce no voltage across the phase lines of the non-active segment(s). This is achieved by operating the switching devices at the opposite ends in phase, i.e. the switching devices have no phase shift. For example, regarding a specific phase line, the ends of this phase line are connected to the same potential of the DC power supply line at the same time, and the potential at the ends is changed at the same time to the other potential of the DC power supply line.

A plurality of consecutive segments which are active at the same time or which are non-active at the same time is called a "sector". The term "sector" also includes the case that the sector consists of a single segment. For example, while two vehicles are driving on the same track using the same conductor arrangement for receiving energy, the first vehicle receives energy by an electromagnetic field produced by a first active sector of the conductor arrangement and the second vehicle receives energy by an electromagnetic field produced by a second active sector of the conductor arrangement. In between the first active sector and the second active sector, there is a non-active (passive) sector. Since the switching devices at the opposite ends of the non-active sector are controlled to be operated in phase (with no phase shift), and since the switching devices at the opposite ends of the first and second active sector are operated with a phase shift to produce a voltage across the active sectors, all switching devices, which are operated at a time, are coordinated regarding their operation. Preferably, the control of the switching devices is coordinated. For example, a control signal line may extend along the track and each switching device of the conductor arrangement is connected to the control signal line. Control signals may be transferred via the control signal line to each switching device which is located at the end of an active or non-active sector. The other switching devices, which are not located at the end of a non-active or active sector, may be switched off completely or may be operated as well.

There are several possibilities regarding the source of the control signals which are transferred to the switching devices. One possibility is to use one of the switching devices as master. The master outputs the control signals to the other switching devices. Another possibility is to use a separate central control unit which outputs the control signals to all switching devices. There are other possibilities, for example that each switching device comprises a data storage storing the control data for operation of the switching device for at least a period of time. In this case, the start of the period of time can be coordinated for all switching devices which are to be operated. However, this option seems to be less flexible and more sensitive to failure.

Still another possibility is to use a distributed control algorithm with hard switches or software control in each switching device. It is decided in each switching device when the segment is switched on or off and which phase of the alternating current in the segment is produced. For example, the switching devices communicate via an electronic communications means, such as CAN bus or Ethernet, and each switching device coordinates the operation with its neighbouring switching devices. The switching device, which starts operation first, can produce an arbitrary phase and the other switching devices receive the information about the phase from this first switching device and start operation accordingly.

If there are more than two vehicles travelling on the same track and if the same conductor arrangement is used to transfer energy to the vehicles, there will be a further sector of at least one segment which is active. For example, if there are three vehicles and if the first vehicle is travelling in the range of the first active sector,
- the first active sector is followed by a first passive (non-active) sector,
- the first passive sector is followed by the second active sector for transferring energy to the second vehicle,
- the second active sector is followed by a second passive sector and
- the second passive sector is followed by the third active sector for transferring energy to the third vehicle.

Then, the switching devices at the ends of the first active sector and the switching devices at the ends of the third active sector are operated in phase. "In phase" in this context means that the switching devices at the opposite ends of the same active sector are operated at a phase shift to produce a voltage across the phase lines of the sector, but that the switching devices of the first and third active sector which are located at the same side (in the direction of travel) of the first and third active sector are operated in phase. Furthermore, since the switching devices at the opposite ends of the passive sectors are operated in phase, the switching devices at the ends of the second active sector are operated with a phase shift compared to the switching devices at the opposite ends of the first and third active sector.

Generally, not only related to the example of the preceding paragraph, but also related to other embodiments of the invention, it is preferred that switching devices of the same conductor arrangement which are operated at a phase shift are operated with a phase shift of 180° which means that the phase shift corresponds to half a cycle of the operation. The cycle is related to the electric potential at the alternating current side of the switching device as a function of time. If the electric potential at the alternating current side is produced by switching on and off each switch of the switching device just one time during each cycle, a nearly rectangular shape of the alternating current side potential is produced. In this case, the switching cycle of the switches of the switching device is identical with the cycle of the electric potential. However, it is also possible, that the switches of the switching device are operated at a higher frequency in order to produce other shapes (i.e. another time dependent behaviour) of the electric potential at the alternating current side of the switching device.

Example and further embodiments of the invention will be described with reference to the attached drawings. The figures show:
- Fig. 1: schematically a rail vehicle which is travelling on a track, wherein the track is provided with a conductor arrangement for transferring electromagnetic field energy to the vehicle,
- Fig. 2: a circuit diagram of parts of the conductor arrangement,
- Fig. 3: a circuit diagram similarly to the diagram of Fig. 2, wherein the time dependent behaviour of the electric potential at the alternating current side of the inverters of the arrangement is illustrated,
- Fig. 4: schematically two rail vehicles travelling on the same track and a series of consecutive segments of a conductor arrangement for transferring energy to the vehicles, wherein the inverters are operated in a manner which does not correspond to the present invention,
- Fig. 5: a presentation similarly to the picture shown in Fig. 4, wherein the inverters are operated in a manner according to the present invention,
- Fig. 6: the arrangement comprising two rail vehicles as shown in Fig. 5 but in a later stage of operation, and
- Fig. 7: an arrangement similar to the arrangements shown in Fig. 5 and 6, wherein three rail vehicles are travelling on the same track and are provided with energy by the same conductor arrangement.

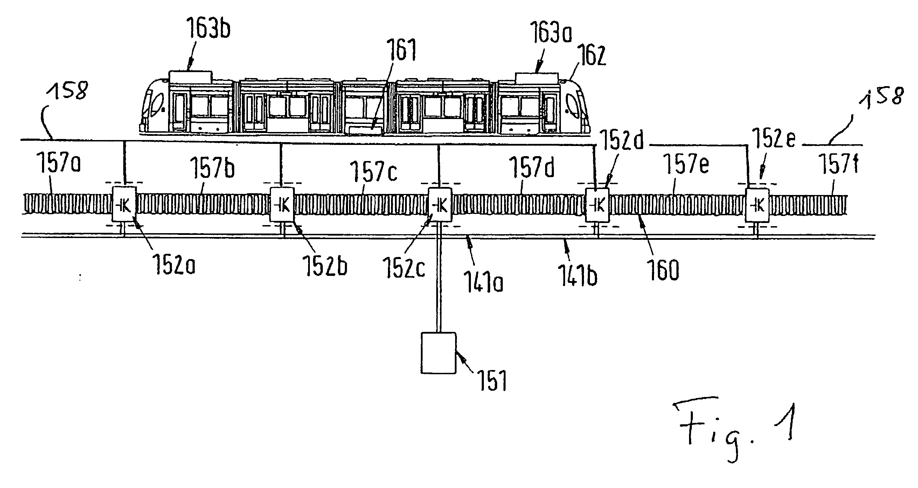

Fig. 1 shows a rail vehicle 162, for example a tram. The vehicle 162 comprises two energy storages 163a, 163b located at the roof of the vehicle. The energy storages 163 may be, for example, conventional batteries and/or capacitors. A receiver 161 for receiving an electromagnetic field and for converting the field by induction to electric energy is located at the bottom of the vehicle 162. The travel direction within the schematic drawing of Fig. 1 is from left to right or from right to left. As shown below of the vehicle 162, a conductor arrangement extends along the track of the vehicle 162.

The conductor arrangement comprises a series of consecutive segments 157. Fig. 1 shows six consecutive segments 157a - 157f. At each interface between two neighbouring consecutive segments (for example, segments 157b, 157c or segments 157d, 157e are neighbouring consecutive segments) an inverter 152 is connected to the phase lines of each of the two neighbouring consecutive segments. Fig. 1 shows five inverters 152a - 152e. The phase lines are located on the alternating current side of the respective inverters 152. On the direct current side, each inverter 152 is connected to a DC power supply comprising two power supply lines 141a, 141b at different electric potential. The DC power supply lines are fed by a central DC power source 151. Although the specific described here comprises a DC power supply, an AC power supply may be used instead. In this case, the inverters are replaced by corresponding converters or by an arrangement of switches.

Furthermore, a control signal line 158 also extends along the track of the vehicle 162. Each inverter 152 comprises a control signal node which is connected to the control signal line 158. For example, the control signal line 158 may be a data bus and each inverter 152 may comprise a corresponding bus controller for receiving and optionally sending messages via the data bus to other devices. An individual address may be assigned to each inverter 152 so that data packages comprising the address can be recognized by the bus controller and the content of the package can be used to control the operation of the respective inverter in a coordinated fashion with the operation of the other inverters 152.

Alternatively, or in addition, the control signal lines 158 may be used to broadcast the same signal to all inverters. This signal may be, for example, a clock signal for synchronising the operation of the inverters, or a status signal. In this case, the operation patterns of the inverters may be stored in the inverters, may be controlled separately by a control device, or may be controlled in other ways like using an algorithm comprising decision trees in each inverter. The position of a vehicle may be known, determined, or detected by sensors. For example, each segment 157 may be combined with one or more detection sensors. The detection signal of the detection sensor is transferred to the respective inverter or inverters so that the inverters required for operation can be operated in phase or with no phase shift. As an example, a detection sensor may detect that the vehicle 162 has reached the segment 157e. Therefore, inverter 152e is switched on and is operated with the same switching pattern (i.e. with no phase shift) as inverter 152d. Furthermore, if another detection sensor which is monitoring the range of segment 157b detects that the vehicle 162 is leaving the range of segment 157b, the detection sensor may output a corresponding signal(s) to stop the operation of inverter 152a and - instead - start the operation of inverter 152b with the same switching pattern as inverter 152a. Consequently, the sector of consecutive segments which before started at the location of inverter 152a and ended at the location of inverter 152d has been shifted to start with inverter 152b and to end with inverter 152e. The term "switching pattern" refers to the time dependent operation of the switches of the inverter. There are many ways of controlling the switching pattern, including with a separate controller or using individual intelligent control units for each inverter.

For example, the inverter at the start of such a sector may be operated using a first switching pattern and the inverter at the end of the same sector may be operated using a second switching pattern wherein the first and the second switching pattern comprise a phase shift, preferably a phase shift of 180°. If an inverter at the start of such a sector (e.g. inverter 152a) has been switched off, it memorizes that it was operated using the first switching pattern. "Memorizes" includes the case that the inverter or an external control device of the inverter can determine the switching pattern when it is started again. The next time when a vehicle is entering the respective segment (here segment 157a) and - therefore - the operation of the inverter 152a is started again, it uses the same switching pattern, but in this case, the inverter 152a is the inverter at the end of the sector. "Start" and "end" refers to a defined direction, e.g. the direction of travel of two vehicles on the track.

Furthermore, inverter 152d which has been switched off, but was an inverter at the end of the active sector, memorizes that it was operated using the second switching pattern. Since the detection sensor of segment 157d (which is with respect to the defined direction the segment before the inverter 152d) still detects the presence of a vehicle, the next operation of the inverter 152d will be performed using the first switching pattern. If the active sector consists of only one segment, the inverter at the end of the active sector which will become (in the next step) the inverter at the start of the active sector always changes the switching pattern. In other words: The question, whether the inverter changes the switching pattern or not, depends on the question if the inverter is still located within an active sector.

Generally speaking: The inverter at the start of an active sector, which is switched off and is no longer located within an active sector, does not change the switching pattern when it is started again to become the inverter at the end of another active sector. However, the inverter at the end of an active sector changes the switching pattern to become the inverter at the start of the sector. The sector can be called "moving sector" since it moves with the vehicle to be provided with energy.

As another example, when a vehicle is determined to be in a particular sector and ready to receive power the rearmost inverter in the sector determines the switching pattern of the other active sectors and sets its switching pattern appropriately. The other inverters in the sector follow accordingly. If there are no other active sectors the rearmost inverter uses the last pattern which was used before.

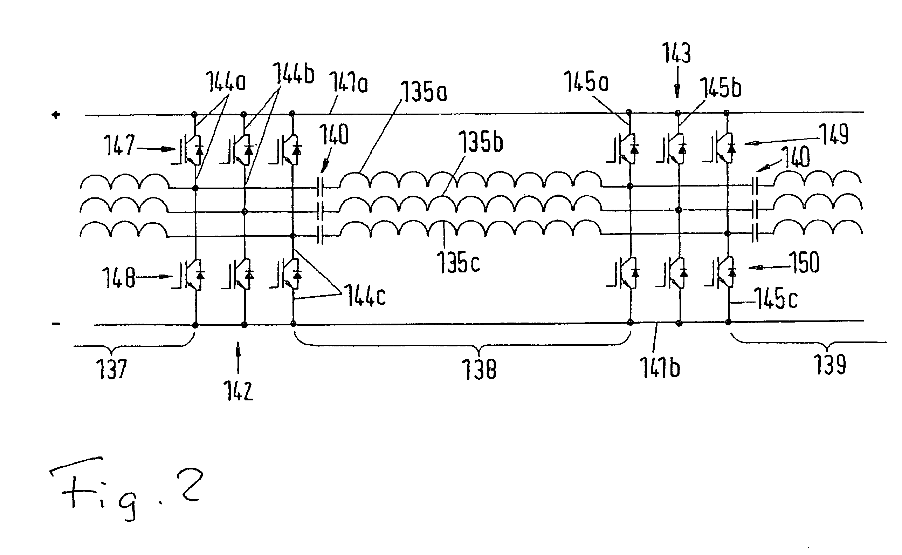

Fig. 2 shows a circuit diagram. A row of consecutive segments 137, 138, 139 of an electric conductor arrangement for producing an electromagnetic field is partially shown in the figure. Only one segment is fully shown, namely segment 138. The segments 137, 138, 139 each comprise three phase lines 135a, 135b, 135c. Each phase line 135 of each segment 137, 138, 139 comprises at one end of the phase line 135 a capacity 140 for compensating the inductance of the phase line 135. As a result, the impedance is zero.

As mentioned before, the present invention proposes not to use an alternating current power supply line, but instead direct current power supply lines as shown in Fig. 2. The two lines of the DC power supply are denoted by reference numerals 141a, 141b. In practice, one of these lines 141 may be realized by ground, for example by the rails of a railway.

Each phase line 135 is connected to the different potentials of the DC supply lines 141 via in each case one switch 147, 148. For example, phase line 135a is connected via connection 144a to plus potential and minus potential. Within connection 144a, the switch between phase line 135a and plus potential is denoted by reference numeral 147 and the switch between the phase line 135a and minus potential is denoted by 148. The connections 144b, 144c of the phase lines 135b, 135c to plus and minus potential (lines 141a, 141b) are constructed in the same manner. This description applies to interface 142 between segment 137 and segment 138. At the interface between segment 138 and segment 139, the connections between the phase lines 135 and the DC supply line 141 are denoted by reference numerals 145a, 145b, 145c. The switches between the phase lines 135 and the plus potential of line 141a are denoted by 149 and the switches to the minus potential are denoted by 150.

Consequently, each interface 142, 143 can be connected and disconnected to/from the supply line 141 by operating switches 147, 148 or 149, 150. The switches 147, 148 constitute a first inverter, together with a control of the switches 147, 148 which is not shown in Fig. 2. In the same manner, switches 149, 150 and a corresponding control for controlling the switching operations of these switches constitute a second inverter at interface 143. During operation of the inverters, the switches of the inverter are repeatedly switched on and off to produce a desired alternating current at the interface 142, 143, i.e. at the end of one of the segments 137, 138, 139. For example, the connection 144a for connecting the DC supply line 141 to phase line 135a therefore comprises a series connection of switch 147 and switch 148 wherein a connection is made between phase line 135a and a contact point between the switches 147, 148.

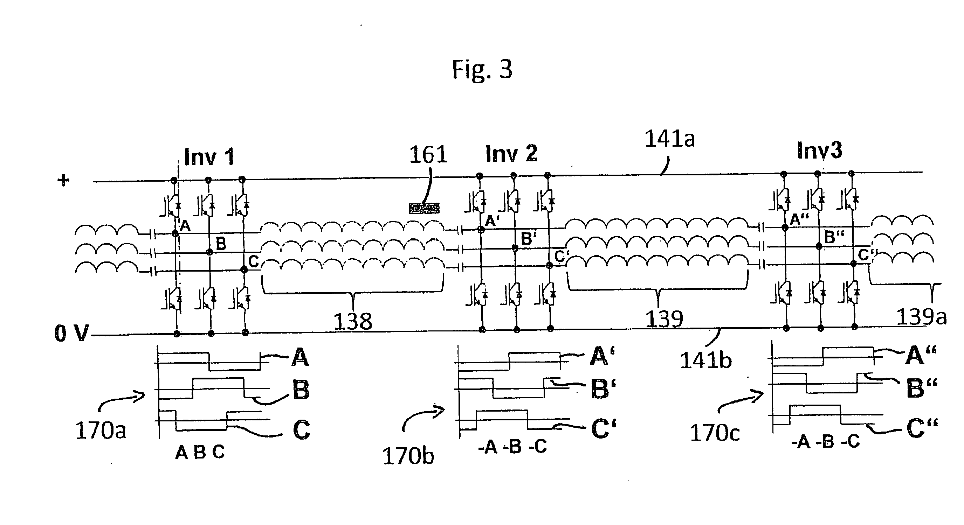

The arrangement shown in Fig. 3 is similar to the arrangement shown in Fig. 2. The only difference is that two consecutive segments 138, 139 and their respective interfaces to neighboring segments are fully shown in Fig. 3. The inverters at the three interfaces shown in Fig.3 are denoted by Inv1, Inv2, Inv3. The constitution of these inverters was described with reference to Fig. 2.

In the situation shown in Fig. 3, the receiving device 161 of a vehicle is travelling along a section of the path of travel and this section is defined by the extension of the segment 138 in the direction of travel. The receiving device 161 is moving from left to right in Fig. 3. The beginning of segment 138 is defined by the interface to segment 137 where inverter Inv1 is located. The end of segment 138 is defined by the interface to segment 139 where inverter Inv2 is located. In the same manner, the beginning of segment 139 which is the neighboring segment of segment 138, is defined by the location of inverter Inv2 and the end of segment 139 is defined by the location of inverter Inv3.

Furthermore, Fig. 3 shows schematically the electric potential produced by inverter Inv1 as a function of time (diagram 170a) and also shows the electric potential produced by inverter Inv2 as a function of time (diagram 170b). The upper line (which is a rectangular alternating voltage line in the example of Fig. 3, but may also be an alternating voltage line of other shape) is denoted by letter A, indicating that this electric potential can be measured at point A at the interface of phase line 135a. In the same manner, the electric potentials at point B, the interface point of phase line 135b, and the electric potential at point C, the interface point of phase line 135c, are shown in diagram 170a. Diagram 170b shows the electric potential at corresponding interface points A', B', C' of inverter Inv2.

The diagrams 170 are used to illustrate the phase shift between the inverters Inv1, Inv2. At the time depicted in Fig. 3, this phase shift is 180° which means that the electric potential at point A and at point A' have the same absolute value, but the potential is negative for point A' when it is positive for point A and vice versa. The same applies to the other phases at points B, B' and C, C'. Since the alternating voltage produced by inverters Inv1, Inv2 is a three phase alternating current, the phase shift between the three phases is 120°. More generally speaking, the inverters at the interfaces between consecutive segments produce alternating voltages preferably having a constant time period (i.e. a cycle of constant length) and constant peak voltages. The voltage level in the middle between the two peak voltages is shown for each phase in diagrams 170 as a horizontal line.

Other than shown in Fig. 3, not only one segment can be operated in the manner described above (i.e. by producing a phase shift of the electric potential at the opposite ends of the segment), but also two or more consecutive segments forming a sector can be operated in this manner. In this case, it is sufficient to operate one inverter at one end of the sector and one inverter at the opposite end of the sector. For example, in order to operate the segments 138, 139, inverter Inv3 may be operated in the same manner as inverter Inv2 and inverter Inv2 may be switched off at the same time (i.e. is not operated).

Coming back to the situation depicted in Fig. 3, the receiving device 161 is moving from left to right. When receiving device 161 approaches the end of segment 138 the operation of inverter Inv3 is started. Diagram 170c also shows the electric potentials as functions of time at interface points A", B", C" at the location of inverter Inv3. There is no phase shift between the electric potential produced by inverters Inv2, Inv3. Consequently, as long as inverter Inv2 is operated, there is no voltage across segment 139 and no current is flowing through segment 139.

As soon as the receiving device 161 reaches the interface between segments 138, 139 (or shortly before it reaches the interface) the operation of inverter Inv2 is stopped, i.e. all switches of inverter Inv2 stay open. Consequently, an alternating current is established through the consecutive segments 138, 139. When the receiving device 161 has reached segment 139, inverter Inv1 can be switched off. In order to prepare this, first inverter Inv2 is switched on again, but with no phase shift to inverter Inv1. This procedure can be repeated for the next consecutive segment 139a as soon as the receiving device 161 approaches the interface where inverter Inv3 is located.

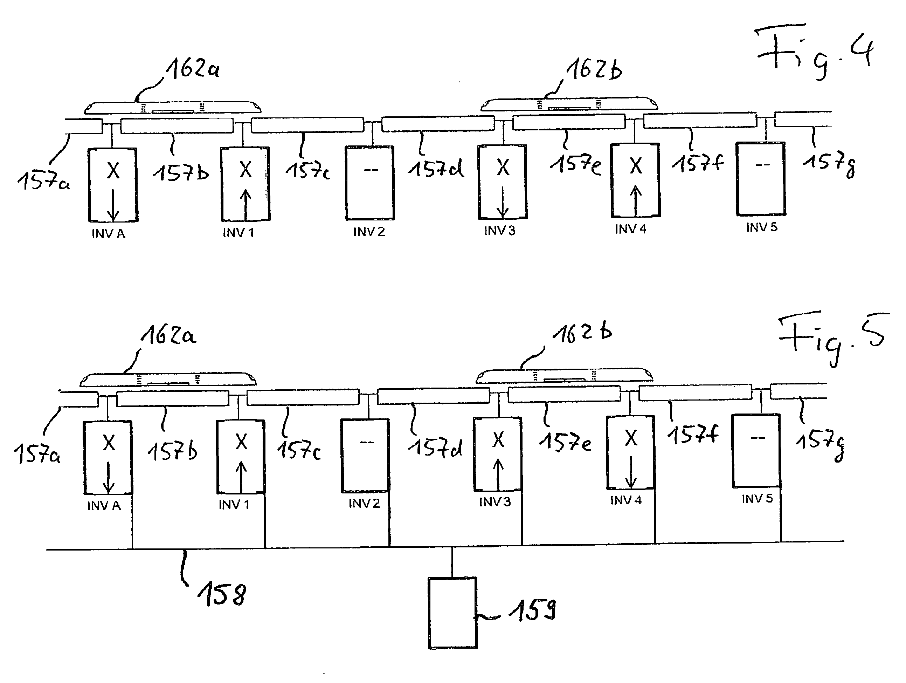

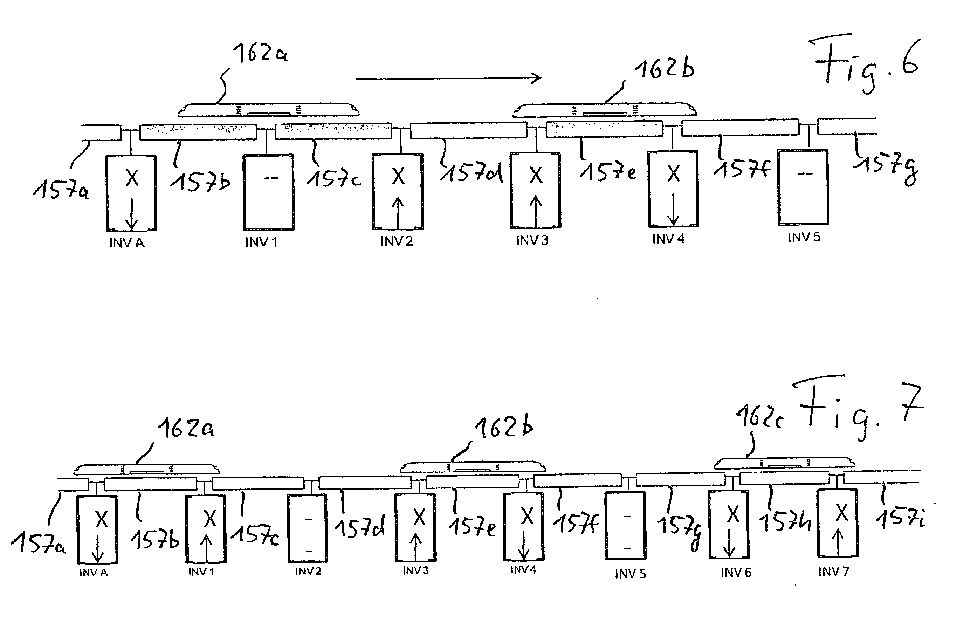

Fig. 4 shows two vehicles 162a 162b travelling on the same track, for example from left to right. Similarly to the situation depicted in Fig. 1, the consecutive segments of the conductor arrangement are denoted by 157, followed by a letter from a - g. The same notation is used in Fig. 5 to Fig. 7, but in Fig. 7 there are two additional consecutive segments 157h, 157i. The inverters in Fig. 4 to 7 are denoted by "INV" followed by letter A or by a number from 1 to 7. Preferably, the inverters INV comprise a control signal input which is connected to a control signal line 158, as shown in Fig. 5. The control signals to the inverters INV may be output by a central control unit 159 which is also connected to the control signal line 158.

The operation state of the inverters INV is symbolized in Fig. 4 to Fig. 7 by either "--" which means that the inverter is temporarily switched off and - therefore - does not produce any electric potential on the alternating current side, or is symbolized by "X" and an upwardly or downwardly pointing arrow which means that the inverter is operated at the time. The upwardly pointing arrow means that a first switching pattern is used to operate the inverter. The downwardly pointing arrow means that a second switching pattern is used to operate the inverter. There is a phase shift which is caused by using the different switching patterns. For example, as shown in the left of Fig. 4, the second switching pattern is used for inverter INV A and the first switching pattern is used for inverter INV 1 which produces a phase shift across 157b. Preferably, the phase shift between the first and second switching pattern is 180°.

Fig. 4 shows a situation in which two segments, namely segments 157b, 157e, are active and the remaining segments shown in Fig. 4 are non-active. The active segments 157b, 157e form active sectors comprising just one segment.

Between the sector of segment 157b and the sector of segment 157e, there is a further sector comprising the segment 157c, 157d. Since there is no vehicle travelling in the range of this sector, the corresponding segments can be passive, i.e. should not produce an electromagnetic field. However, since inverter INV 1 is operated using the first switching pattern and since inverter INV 3 is operated using the second switching pattern, there is an electric voltage across each phase line in this sector and an electromagnetic field is produced by segments 157c, 157d. This is not desirable.

In contrast to Fig. 4, Fig. 5 shows a preferred embodiment of the present invention. The depicted situation is equal to the situation of Fig. 4 with one exception: The switching patterns of inverters INV 3, INV 4 are changed. Inverter INV 3 is operated using the first switching pattern which is the same switching pattern used for inverter INV 1. Therefore, the sector comprising segments 157c, 157d is passive, since there is no voltage across the phase lines of the sector. In addition, the switching pattern used for inverter INV 4 is the second switching pattern so that segment 157e is active.

Fig. 6 shows an operating state at a later stage of the situation shown in Fig. 5. Vehicle 162a has travelled from left to right, as indicated by an arrow pointing to the right. Therefore, the active sector which consisted of segment 157b has been enlarged to also comprise 157c. In order to enlarge the active sector, inverter INV 1 has been switched off and inverter INV 2 has been switched on using the same switching pattern as inverter INV 1. There is still a passive sector between the two vehicles 162a, 162b which consists of segment 157d only.

Fig. 7 shows a situation comprising three vehicles 162a, 162b, 162c. Each vehicle is occupying an active sector consisting of just one segment 157b, 157e, 157h. The first active sector of segment 157b is produced by operating the inverter INV A at the start of the sector using the second switching pattern and operating the inverter INV 1 at the end of the first active sector using the first switching pattern. "Start" and "end" of a sector is referred to the direction of travel which is assumed to extend from left to right in Fig. 7. However, the vehicles may also drive from right to left.

As described before, the first active sector is operated using a first combination of switching patterns, namely the first pattern for the inverter at the end of the sector and the second switching pattern for the inverter at the start of the active sector. The same combination of switching patterns is used for the third active sector on the right hand side of Fig. 7 which consists of segment 157h. However, since there is a second active sector between the first and third active sector and since another combination of switching patterns is used to operate the second active sector, there are passive sectors in between the active sectors. The first passive sector is the sector consisting of segments 157c, 157d and the second passive sector is the sector consisting of segment 157f, 157g. The combination of switching patterns which is used for the second active sector is: The first switching pattern for operating the inverter INV 3 at the start of the sector and using the second switching pattern for operating the inverter INV 4 at the end of the second active sector.

Assuming that the defined direction, in particular the direction of travel is from right to left, the principle of changing or not changing the switching pattern of a particular inverter can be described as follows. This principle was described before with reference to Fig. 1. As soon as the second vehicle 162b has travelled from the range of segment 157e to the range of segment 157d, the operation of inverter INV 4 at the start of the active sector is stopped. On the other hand, the following vehicle 162c will travel to the range of segment 157f. Therefore, the inverter INV 4 at the end of segment 157f will be switched on again using the same switching pattern as before. This means that the switching pattern of an inverter which was the inverter at the end of an active sector is not changed after stopping and restarting the operation of the inverter. However, in contrast, the switching pattern of an inverter at the end of an active sector is changed, either with or without an intermediate phase of non-operation. If the active sector just comprises one segment, the switching pattern is changed without an intermediate phase of non-operation. If the active sector comprises more than one segment or if the active sector is enlarged to comprise more than one segment, the operation of the inverter at the end of the active sector is first stopped and than restarted using the other switching pattern.

The situations illustrated in Fig. 5 to Fig. 7 are just examples. However, the principles which have been described with reference to these Figures can also be applied to other operational situations. For example, the number of segments within the active or passive sectors may differ. Furthermore, the lengths of the vehicles in relation to the length of the segments may differ, and the method of controlling the detailed switching patterns may differ.

## Claims

1. An arrangement for providing a plurality of vehicles (162), in particular track bound vehicles, with electric energy, wherein:
- the arrangement comprises an electric conductor arrangement for producing alternating electromagnetic fields and for thereby transferring electromagnetic energy to the vehicles (162),
- the conductor arrangement comprises a plurality of consecutive segments (157), wherein each segment (157) extends along a different section of a path of travel of the vehicles (162),
- each of the consecutive segments (157) comprises at least one phase line (135a, 135b, 135c) for carrying a phase of an alternating current for producing the alternating electromagnetic field,
- corresponding phase lines of neighbouring consecutive segments for carrying the same phase of the alternating current are connected in series to each other,
- the arrangement comprises a power supply line (141 a, 141b) for supplying electric energy to the segments (157),
- a switching device (152; INV), for producing the alternating current of the conductor arrangement from the current carried by the power supply line (141 a, 141 b), is connected to each interface between two neighbouring consecutive segments (157), thereby connecting the power supply line (141a, 141b) with the phase lines (135) of the neighbouring consecutive segments (157),
- the arrangement comprises a control device (152a; 159) for controlling the operation of the switching devices (152) in such a manner that:
● a first active sector (157b) of the conductor arrangement, which sector comprises at least one of the consecutive segments (157), is operated to produce an electromagnetic field in order to transfer electromagnetic energy to a first vehicle (162a), wherein a first switching device (INV A) is connected to a first end of the first active sector (157b) and a second switching device (INV 1) is connected to a second end of the first sector (157b) opposite to the first end so that the first switching device (INV A) and the second switching device (INV 1) are connected by at least one phase line of the first active sector (157b), each phase line consisting of the phase line or the phase lines of one or more than one segment corresponding to the number of the segments of the first sector, wherein the first (INV A) and second switching device (INV 1) are controlled to operate at a phase shift so that an alternating voltage is produced across each phase line of the first sector (157b),
● a second active sector (157e) of the conductor arrangement, which comprises at least one of the consecutive segments (157), is operated to produce an electromagnetic field in order to transfer electromagnetic energy to a second vehicle (162b), wherein a third switching device (INV 3) is connected to a first end of the second active sector (157e) and a fourth switching device (INV 4) is connected to a second end of the second active sector (157e) opposite to the first end so that the third switching device and the fourth switching device are connected by at least one phase lines of the second active sector (157e), each phase line consisting of the phase line or the phase lines of one or more than one segment corresponding to the number of the segments of the sector (157e), wherein the third (INV 3) and fourth (INV 4) switching device are controlled to operate at a phase shift so that an alternating voltage is produced across each phase line of the second active sector (157e),
● if there are further segments (157c, 157d) of the plurality of consecutive segments of the conductor arrangement connecting the segments of the first (157b) and second (157e) sector and if none of the further segments (157c, 157d) is to be operated to transfer electromagnetic energy to a vehicle, the first to fourth switching device are controlled to produce no voltage across the phase line(s) of the further segments (157c, 157d).

2. A method of providing a plurality of vehicles (162), in particular track bound vehicles, with electric energy, wherein:
- an electric conductor arrangement is operated to produce alternating electromagnetic fields, thereby transferring electromagnetic energy to the vehicles (162),
- the conductor arrangement comprises a plurality of consecutive segments (157) which are operated separately, wherein each segment (157) extends along a different section of a path of travel of the vehicles (162),
- each of the consecutive segments (157) comprises at least one phase line which is used to carry a phase of an alternating current for producing the alternating electromagnetic field,
- corresponding phase lines of neighbouring consecutive segments (157) for carrying the same phase of the alternating current are used in series connection to each other,
- a power supply line (141 a, 141 b) is used for supplying electric energy to the segments (157),
- switching devices (152; INV) are used for producing the alternating current of the conductor arrangement from the current carried by the power supply line (141 a, 141b), such a switching devices (152; INV) being connected to each interface between two neighbouring consecutive segments (157), thereby connecting the power supply line (141 a, 141 b) with the phase lines of the neighbouring consecutive segments (157),
- the operation of the switching devices (152; INV) are controlled in such a manner that:
● a first active sector (157b) of the conductor arrangement, which comprises at least one of the consecutive segments (157), is operated to produce an electromagnetic field in order to transfer electromagnetic energy to a first vehicle (162a), wherein a first switching device (INV A) is connected to a first end of the first active sector and a second switching device (INV 1) is connected to a second end of the first active sector opposite to the first end so that the first switching device (INV A) and the second switching device (INV 1) are connected by at least one phase line of the first active sector, each phase line consisting of the phase line or the phase lines of one or more than one segment corresponding to the number of the segments (157) of the first active sector, wherein the first (INV A) and second (INV 1) switching device are controlled to operate at a phase shift so that an alternating voltage is produced across each phase line of the first active sector,
● a second active sector (157e) of the conductor arrangement, which comprises at least one of the consecutive segments (157), is operated to produce an electromagnetic field in order to transfer electromagnetic energy to a second vehicle (162b), wherein a third switching device (INV 3) is connected to a first end of the second sector (157e) and a fourth switching device (INV 4) is connected to a second end of the second sector (157e) opposite to the first end so that the third switching device (INV 3) and the fourth switching device (INV 4) are connected by at least one phase lines of the second sector (157e), each phase line consisting of the phase line or the phase lines of one or more than one segment (157) corresponding to the number of the segments (157) of the sector (157e), wherein the third (INV 3) and fourth (INV 4) switching device are controlled to operate at a phase shift so that an alternating voltage is produced across each phase line of the second sector (157e),
● if there are further segments (157c, 157d) of the plurality of consecutive segments of the conductor arrangement connecting the segments of the first and second sector (157e) and if none of the further segments (157c, 157d) is to be operated to transfer electromagnetic energy to a vehicle, the first to fourth switching device are controlled to produce no voltage across the phase line(s) of the further segments (157c, 157d).

## Patentansprüche

1. Anordnung zur Versorgung einer Mehrzahl von Fahrzeugen (162), insbesondere spurgebundenen Fahrzeugen, mit elektrischer Energie, wobei:
- die Einrichtung eine elektrische Leiteranordnung zur Erzeugung von elektromagnetischen Wechselfeldern und somit zur Übertragung elektromagnetischer Energie auf die Fahrzeuge (162) aufweist,
- die elektrische Leiteranordnung eine Mehrzahl aufeinanderfolgender Segmente (157) aufweist, wobei jedes Segment (157) sich entlang einer verschiedenen Teilstrecke eines Fahrwegs der Fahrzeuge (162) erstreckt,
- jedes der aufeinanderfolgenden Segmente (157) wenigstens eine Phasenleitung (135a, 135b, 135c) zur Führung einer Phase eines Wechselstroms zur Erzeugung des elektromagnetischen Wechselfelds aufweist,
- entsprechende Phasenleitungen benachbarter aufeinanderfolgender Segmente zur Führung derselben Phase des Wechselstroms in Reihe geschaltet sind,
- die Anordnung eine Versorgungsleitung (141 a, 141 b) zur Versorgung der Segmente (157) mit elektrischer Energie aufweist,
- eine Schaltvorrichtung (152; INV), zur Erzeugung des Wechselstroms der Leiteranordnung aus dem durch die Versorgungsleitung (141 a, 141 b) geführten Strom, mit jeder Schnittstelle zwischen zwei benachbarten aufeinanderfolgenden Segmenten (157) verbunden ist, und somit die Versorgungsleitung (141 a, 141 b) mit den Phasenleitungen (135) der benachbarten aufeinanderfolgenden Segmente (157) verbindet,
- die Anordnung eine Steuerungsvorrichtung (152a; 159) aufweist, um den Betrieb der Schaltvorrichtungen (12) derart zu steuern, dass:
● ein erster aktiver Abschnitt (157b) der Leitanordnung, welcher mindestens einen der aufeinanderfolgenden Segmente (157) aufweist, zur Erzeugung eines elektromagnetischen Feldes betrieben wird, um elektromagnetische Energie auf ein erstes Fahrzeug (162a) zu übertragen, wobei eine erste Schaltvorrichtung (INV A) mit einem ersten Ende des ersten aktiven Abschnitts (157b) und eine zweite Schaltvorrichtung (INV 1) mit einem zweiten, dem ersten Ende gegenüberliegenden, Ende des ersten Abschnitts verbunden ist, so dass die erste Schaltvorrichtung (INV A) und die zweite Schaltvorrichtung (INV 1) durch mindestens eine Phasenleitung des ersten aktiven Abschnitts (157b) verbunden sind, wobei jede Phasenleitung aus der oder den Phasenleitungen eines oder mehrerer Segmente entsprechend der Anzahl der Segmente des ersten Abschnitts besteht, wobei die erste (INV A) und die zweite Schaltvorrichtung (INV 1) bei einem Phasensprung gesteuert betrieben werden, so dass eine Wechselspannung entlang jeder Phasenleitung des ersten Abschnitts (157b) erzeugt wird,
● ein zweiter aktiver Abschnitt (157e) der Leitanordnung, der wenigstens einen der aufeinanderfolgenden Segmente (157) aufweist, zur Erzeugung eines elektromagnetischen Feldes betrieben wird, um elektromagnetische Energie auf ein zweites Fahrzeug (162b) zu übertragen, wobei eine dritte Schaltvorrichtung (INV 3) mit einem ersten Ende des zweiten aktiven Abschnitts (157e) verbunden ist und eine vierte Schaltvorrichtung (INV 4) mit einem zweiten, dem ersten Ende gegenüberliegenden, Ende des zweiten aktiven Abschnitts (157e) verbunden ist, so dass die dritte Schaltvorrichtung und die vierte Schaltvorrichtung durch mindestens eine Phasenleitung des zweiten aktiven Abschnitts (157e) verbunden sind, wobei jede Phasenleitung aus der oder den Phasenleitungen eines oder mehrerer Segmente entsprechend der Anzahl der Segment des Abschnitts (157e) besteht, wobei die dritte (INV 3) und vierte (INV 4) Schaltvorrichtung bei einem Phasensprung gesteuert betrieben werden, so dass eine Wechselspannung entlang jeder Phasenleitung des zweiten aktiven Abschnitts (157e) erzeugt wird,
● falls weitere Segmente (157c, 157d) der Mehrzahl von aufeinanderfolgenden Segmenten der Leitanordnung, die Segmente des ersten Abschnitts (157b) und des zweiten Abschnitts (157e) verbinden und falls keines der weiteren Segmente (157c, 157d) zur Übertragung von elektromagnetischer Energie auf ein Fahrzeug betrieben werden soll, die erste bis vierte Schaltvorrichtung derart betrieben werden, dass keine Spannung entlang der Phasenleitunge(n) der weiteren Segmente (157c, 157d) erzeugt wird.

2. Verfahren zur Versorgung einer Mehrzahl von Fahrzeugen (162), insbesondere spurgebundener Fahrzeugen, mit elektrischer Energie, wobei:
- eine elektrische Leitanordnung zur Erzeugung von elektromagnetischen Wechselfeldern betrieben wird und somit elektromagnetische Energie auf die Fahrzeuge (162) übertragen wird,
- die Leitanordnung eine Mehrzahl von aufeinanderfolgenden Segmenten (157) aufweist, die getrennt betrieben werden, wobei jedes Segment (157) sich entlang einer verschiedenen Teilstrecke eines Fahrwegs der Fahrzeuge (162) erstreckt,
- jedes der aufeinanderfolgenden Segmente (157) wenigstens eine Phasenleitung aufweist, die zur Führung einer Phase eines Wechselstroms zur Erzeugung des elektromagnetischen Wechselfelds verwendet wird,
- entsprechende Phasenleitungen benachbarter aufeinanderfolgender Segmente zur Führung derselben Phase des Wechselstroms in Reihenschaltung verwendet werden,
- eine Versorgungsleitung (141 a, 141 b) zur Versorgung der Segmente (157) mit Strom verwendet wird,
- Schaltvorrichtungen (152; INV) zur Erzeugung des Wechselstroms der Leitanordnung aus dem durch die Versorgungsleitung (141 a, 141 b) geführten Strom verwendet werden, wobei solche Schaltvorrichtungen (152; INV) mit jeder Schnittstelle zwischen zwei benachbarten aufeinanderfolgenden Segmenten (157) verbunden sind, und somit die Versorgungsleitung (141 a, 141 b) mit den Phasenleitungen der benachbarten aufeinanderfolgenden Segmente (157) verbinden,
- der Betrieb der Schaltvorrichtungen (152; INV) derart gesteuert wird, dass:
● ein erster aktiver Abschnitt (157b) der Leitanordnung, welcher mindestens eines der aufeinanderfolgenden Segmente (157) aufweist, zur Erzeugung eines elektromagnetischen Feldes betrieben wird, um elektromagnetische Energie auf ein erstes Fahrzeug (162a) zu übertragen, wobei eine erste Schaltvorrichtung (INV A) mit einem ersten Ende des ersten aktiven Abschnitts (157b) und eine zweite Schaltvorrichtung (INV 1) mit einem zweiten, dem ersten Ende gegenüberliegenden, Ende des ersten Abschnitts verbunden sind, so dass die erste Schaltvorrichtung (INV A) und die zweite Schaltvorrichtung (INV 1) durch mindestens eine Phasenleitung des ersten aktiven Abschnitts (157b) verbunden sind, wobei jede Phasenleitung aus der oder den Phasenleitungen eines oder mehrerer Segmente entsprechend der Anzahl der Segmente (157) des ersten aktiven Abschnitts besteht, wobei die erste (INV A) und die zweite Schaltvorrichtung (INV 1) bei einem Phasensprung gesteuert betrieben werden, so dass eine Wechselspannung entlang jeder Phasenleitung des ersten Abschnitts (157b) erzeugt wird,
● ein zweiter aktiver Abschnitt (157e) der Leitanordnung, der wenigstens einen der aufeinanderfolgenden Segmente (157) aufweist, zur Erzeugung eines elektromagnetischen Feldes betrieben wird, um elektromagnetische Energie auf ein zweites Fahrzeug (162b) zu übertragen, wobei eine dritte Schaltvorrichtung (INV 3) mit einem ersten Ende des zweiten Abschnitts (157e) verbunden ist und eine vierte Schaltvorrichtung (INV 4) mit einem zweiten, dem ersten Ende gegenüberliegenden, Ende des zweiten Abschnitts (157e) verbunden ist, so dass die dritte Schaltvorrichtung (INV 3) und die vierte Schaltvorrichtung (INV 4) durch mindestens eine Phasenleitung des zweiten Abschnitts (157e) verbunden sind, wobei jede Phasenleitung aus der oder den Phasenleitungen eines oder mehrerer Segmente (157) entsprechend der Anzahl der Segmente (157) des Abschnitts (157e) besteht, wobei die dritte (INV 3) und vierte (INV 4) Schaltvorrichtung bei einem Phasensprung gesteuert betrieben werden, so dass eine Wechselspannung entlang jeder Phasenleitung des zweiten Abschnitts (157e) erzeugt wird,
● falls weitere Segmente (157c, 157d) der Mehrzahl von aufeinanderfolgenden Segmenten der Leitanordnung, die Segmente des ersten Abschnitts (157b) und des zweiten Abschnitts (157e) verbinden und falls keines der weiteren Segmente (157c, 157d) zur Übertragung von elektromagnetischer Energie auf ein Fahrzeug betrieben werden soll, die erste bis vierte Schaltvorrichtung derart betrieben werden, dass keine Spannung entlang der Phasenleitunge(n) der weiteren Segmente (157c, 157d) erzeugt wird.

## Revendications

1. Agencement pour alimenter une pluralité de véhicules (162), en particulier des véhicules reliés à des rails, avec de l'énergie électrique, dans lequel :
- l'agencement comprend un agencement conducteur électrique pour produire des champs électromagnétiques alternatifs et pour transférer de ce fait de l'énergie électromagnétique aux véhicules (162),
- l'agencement conducteur comprend une pluralité de segments consécutifs (157), dans lequel chaque segment (157) s'étend le long d'une section différente d'une voie de déplacement des véhicules (162),
- chacun des segments consécutifs (157) comprend au moins une ligne de phase (135a, 135b, 135c) pour porter une phase d'un courant alternatif pour produire le champ électromagnétique alternatif,
- des lignes de phase correspondantes de segments consécutifs voisins pour porter la même phase du courant alternatif sont reliées en série l'une à l'autre,
- l'agencement comprend une ligne d'alimentation électrique (141a, 141b) pour fournir de l'énergie électrique aux segments (157),
- un dispositif de commutation (152 ; INV), pour produire le courant alternatif de l'agencement conducteur à partir du courant porté par la ligne d'alimentation électrique (141a, 141b), est relié à chaque interface entre deux segments consécutifs voisins (157), en reliant de ce fait la ligne d'alimentation électrique (141a, 141b) aux lignes de phase (135) des segments consécutifs voisins (157),
- l'agencement comprend un dispositif de commande (152a ; 159) pour commander le fonctionnement des dispositifs de commutation (152) de telle manière que :
- - un premier secteur actif (157b) de l'agencement conducteur, lequel secteur comprenant au moins l'un des segments consécutifs (157), est actionné pour produire un champ électromagnétique afin de transférer une énergie électromagnétique à un premier véhicule (162a), dans lequel un premier dispositif de commutation (INV A) est relié à une première extrémité du premier secteur actif (157b) et un deuxième dispositif de commutation (INV 1) est relié à une deuxième extrémité du premier secteur (157b) à l'opposé de la première extrémité de sorte que le premier dispositif de commutation (INV A) et le deuxième dispositif de commutation (INV 1) soient reliés par au moins une ligne de phase du premier secteur actif (157b), chaque ligne de phase se composant de la ligne de phase ou des lignes de phase d'un ou plusieurs segments correspondant au nombre de segments du premier secteur, dans lequel le premier dispositif de commutation (INV A) et le deuxième dispositif de commutation (INV 1) sont commandés pour fonctionner à un décalage de phase afin qu'une tension alternative soit produite à travers chaque ligne de phase du premier secteur (157b),
- - un deuxième secteur actif (157e) de l'agencement conducteur, lequel secteur comprenant au moins l'un des segments consécutifs (157), est actionné pour produire un champ électromagnétique afin de transférer une énergie électromagnétique à un deuxième véhicule (162b), dans lequel un troisième dispositif de commutation (INV 3) est relié à une première extrémité du deuxième secteur actif (157e) et un quatrième dispositif de commutation (INV 4) est relié à une deuxième extrémité du deuxième secteur actif (157e) à l'opposé de la première extrémité de sorte que le troisième dispositif de commutation et le quatrième dispositif de commutation soient reliés par au moins une ligne de phase du deuxième secteur actif (157e), chaque ligne de phase se composant de la ligne de phase ou des lignes de phase d'un ou plusieurs segments correspondant au nombre de segments du deuxième secteur (157e), dans lequel le troisième dispositif de commutation (INV 3) et le quatrième dispositif de commutation (INV 4) sont commandés pour fonctionner à un décalage de phase afin qu'une tension alternative soit produite à travers chaque ligne de phase du deuxième secteur actif (157e),
- - s'il y a d'autres segments (157c, 157d) parmi la pluralité de segments consécutifs de l'agencement conducteur reliant les segments du premier secteur (157b) et du deuxième secteur (157e) et si aucun des autres segments (157c, 157d) ne doit être actionné pour transférer de l'énergie électromagnétique à un véhicule, le premier dispositif de commutation, le deuxième dispositif de commutation, le troisième dispositif de commutation et le quatrième dispositif de commutation sont commandés pour ne produire aucune tension à travers la ou les lignes de phase des autres segments (157c, 157d).

2. Procédé pour alimenter une pluralité de véhicules (162), en particulier des véhicules reliés à des rails, avec de l'énergie électrique, dans lequel :
- un agencement conducteur électrique est actionné pour produire des champs électromagnétiques alternatifs, en transférant de ce fait de l'énergie électromagnétique aux véhicules (162),
- l'agencement conducteur comprend une pluralité de segments consécutifs (157), qui sont actionnés séparément, dans lequel chaque segment (157) s'étend le long d'une section différente d'une voie de déplacement des véhicules (162),
- chacun des segments consécutifs (157) comprend au moins une ligne de phase pour porter une phase d'un courant alternatif pour produire le champ électromagnétique alternatif,
- des lignes de phase correspondantes de segments consécutifs voisins (157) pour porter la même phase du courant alternatif sont reliées en série l'une à l'autre,
- une ligne d'alimentation électrique (141a, 141b) est utilisée pour fournir de l'énergie électrique aux segments (157),
- des dispositifs de commutation (152 ; INV) sont utilisés pour produire le courant alternatif de l'agencement conducteur à partir du courant porté par la ligne d'alimentation électrique (141a, 141b), un tel dispositif de commutation (152 ; INV) étant relié à chaque interface entre deux segments consécutifs voisins (157), en reliant de ce fait la ligne d'alimentation électrique (141a, 141b) aux lignes de phase des segments consécutifs voisins (157),
- le fonctionnement des dispositifs de commutation (152 ; INV) est commandé de telle manière que :
-- un premier secteur actif (157b) de l'agencement conducteur, lequel secteur comprenant au moins l'un des segments consécutifs (157), est actionné pour produire un champ électromagnétique afin de transférer une énergie électromagnétique à un premier véhicule (162a), dans lequel un premier dispositif de commutation (INV A) est relié à une première extrémité du premier secteur actif et un deuxième dispositif de commutation (INV 1) est relié à une deuxième extrémité du premier secteur actif à l'opposé de la première extrémité de sorte que le premier dispositif de commutation (INV A) et le deuxième dispositif de commutation (INV 1) soient reliés par au moins une ligne de phase du premier secteur actif, chaque ligne de phase se composant de la ligne de phase ou des lignes de phase d'un ou plusieurs segments correspondant au nombre de segments (157) du premier secteur actif, dans lequel le premier dispositif de commutation (INV A) et le deuxième dispositif de commutation (INV 1) sont commandés pour fonctionner à un décalage de phase afin qu'une tension alternative soit produite à travers chaque ligne de phase du premier secteur actif,
-- un deuxième secteur actif (157e) de l'agencement conducteur, lequel secteur comprenant au moins l'un des segments consécutifs (157), est actionné pour produire un champ électromagnétique afin de transférer une énergie électromagnétique à un deuxième véhicule (162b), dans lequel un troisième dispositif de commutation (INV 3) est relié à une première extrémité du deuxième secteur actif (157e) et un quatrième dispositif de commutation (INV 4) est relié à une deuxième extrémité du deuxième secteur (157e) à l'opposé de la première extrémité de sorte que le troisième dispositif de commutation (INV 3) et le quatrième dispositif de commutation (INV 4) soient reliés par au moins une ligne de phase du deuxième secteur actif (157e), chaque ligne de phase se composant de la ligne de phase ou des lignes de phase d'un ou plusieurs segments (157) correspondant au nombre de segments (157) du deuxième secteur (157e), dans lequel le troisième dispositif de commutation (INV 3) et le quatrième dispositif de commutation (INV 4) sont commandés pour fonctionner à un décalage de phase afin qu'une tension alternative soit produite à travers chaque ligne de phase du deuxième secteur (157e),
-- s'il y a d'autres segments (157c, 157d) parmi la pluralité de segments consécutifs de l'agencement conducteur reliant les segments du premier secteur (157b) et du deuxième secteur (157e) et si aucun des autres segments (157c, 157d) ne doit être actionné pour transférer de l'énergie électromagnétique à un véhicule, le premier dispositif de commutation, le deuxième dispositif de commutation, le troisième dispositif de commutation et le quatrième dispositif de commutation sont commandés pour ne produire aucune tension à travers la ou les lignes de phase des autres segments (157c, 157d).
